# EUROPÄISCHE PATENTSCHRIFT

(11) **EP 1 080 143 B1**
(45) Veröffentlichungstag und Bekanntmachung des Hinweises auf die Patenterteilung: **19.03.2003**
(21) Anmeldenummer: 99924983.2
(22) Anmeldetag: 15.05.1999
(51) Int. Cl.: C08J 9/14

(54) **HERSTELLUNG VON POLYURETHANSCHÄUMEN UND GESCHÄUMTEN THERMOPLASTISCHEN KUNSTSTOFFEN**
THE PRODUCTION OF POLYURETHANE FOAMS AND FOAMED THERMOPLASTIC SYNTHETIC MATERIALS
PRODUCTION DE MOUSSES DE POLYURETHANNE ET DE MATIERES SYNTHETIQUES THERMOPLASTIQUES MOUSSEES

(30) Priorität: 22.05.1998 DE 19822944; 22.05.1998 DE 19822945
(43) Veröffentlichungstag der Anmeldung: 07.03.2001
(60) Teilanmeldung: 03001742.0
(73) Patentinhaber: Solvay Fluor und Derivate GmbH, 30173 Hannover (DE)
(72) Erfinder: KRÜCKE, Werner, D-30163 Hannover (DE); ZIPFEL, Lothar, D-30880 Laatzen (DE)
(74) Vertreter: Gosmann, Martin, Dr.
(86) Internationale Anmeldenummer: EP9903360
(87) Internationale Veröffentlichungsnummer: WO99061519

(56) Entgegenhaltungen:
- EP-A- 0 742 250
- EP-A- 0 952 177
- WO-A-96/14354
- WO-A-97/31989
- WO-A-98/27145
- WO-A-98/39378
- US-A- 5 348 681

## Beschreibung

Die Erfindung bezieht sich auf ein Verfahren zur Herstellung von Polyurethanhartschäumen und von geschäumten, thermoplastischen Kunststoffen.

Polyurethanschaumstoffe werden als wärme- bzw. geräuschdämmende Baumaterialien eingesetzt. Die Herstellung von Ein- und Mehrkomponentenpolyurethanschäumen mit Treibmitteln auf Basis von verflüssigtem CO₂ wird in der WO 96/14354 offenbart.

Geschäumte thermoplastische Kunststoffe können, beispielsweise in Form von Platten, als wärme- bzw. geräuschisolierendes Bauteil eingesetzt werden. Die US-A 5,276,063 offenbart ein Verfahren zur Herstellung extrudierter, geschlossenzelliger alkenylaromatischer Polymere unter Verwendung eines Treibmittelgemisches, welches 1,1-Difluoroeth sowie ein weiteres Treibmittel mit geringerem Dampfdruck und noch höherer Löslichkeit im geschmolzenen Polymer vorsieht. Geeignete alkenylaromatische Polymere sind beispielsweise Polymere von Styrol, Alpha-Methylstyrol, Ethylstyrol, Vinylbenzol, Vinyltoluol, Chlorstyrol und Bromstyrol. Diese Polymere können gewünschtenfalls Copolymere wie Acrylsäure, Acrylnitril oder Butadien aufweisen. Die US-A 5,204,169 offenbart die Herstellung von geschäumten thermoplastischen Polymeren wie Polystyrol unter Verwendung von polyfluorierten Kohlenwasserstoffen mit 2 C-Atomen. Das geschäumte Material eignet sich insbesondere für die Nahrungsmittelverpackung. Die EP-A-0 436 847 offenbart die Herstellung von geschäumten thermoplastischen Formkörpern auf Basis von Polyphenylenether-Harzen. Als Treibmittel werden Kohlenwasserstoffe empfohlen. Als brauchbar werden auch halogenierte Kohlenwasserstoffe mit 1 oder 2 Kohlenstoffatomen erwähnt.

Die EP-A-0 742 250 offenbart die Herstellung von Polyurethanweichschäumen. Als Treibmittel wird ein Gemisch aus HFC-134a, HFC-152a und/oder einem halogenierten Kohlenwasserstoff erwähnt.

Die WO 98/27145 offenbart Gemische aus 50 bis 99 Gew.-% HFC-365mfc und 1 bis 50 Gew.-% von mindestens einem weiteren Fluorkohlenwasserstoff, sowie deren Eignung als Treibgas für ein Treibmittel zur Herstellung von Polyurethanschäumen.

Die WO 98/39378 offenbart eine Mischung aus HFC-365mfc und Kohlenwasserstoffen mit 5 oder 6 Kohlenstoffatomen sowie die Verwendung dieser Mischung zur Herstellung von geschäumten Kunststoffen.

Die EP-A-0 952 177 offenbart die Herstellung von Phenolharzschäumen. Als Treibmittel wird ein Gemisch aus HFC-245fa und HFC-365mfc erwähnt.

Aufgabe der vorliegenden Erfindung ist es, ein Verfahren zur Herstellung von Polyurethanhartschaumstoffen mittels eines ausgewählten, neuartigen, vorteilhaften Treibmittels anzugeben. Aufgabe der vorliegenden Erfindung ist es weiterhin, ein Verfahren zur Herstellung von geschäumten thermoplastischen Kunststoffen mittels eines neuartigen, vorteilhaften Treibmittels anzugeben. Diese Aufgaben werden durch das Verfahren und die Treibmittel der vorliegenden Erfindung gelöst.

Ausgangspunkt war die überraschende Erkenntnis, daß Pentafluorbutan, besonders 1,1,1,3,3-Pentafluorbutan (HFC-365mfc) im Gemisch mit bestimmten weiteren Treibmitteln eine für die Herstellung von Polyurethanhartschaumstoffen und geschäumten thermoplastischen Kunststoffen sehr gut geeignete Zusammensetzung liefert.

Das erfindungsgemäße Verfahren zur Herstellung von Polyurethanhartschaumstoffen und geschäumten thermoplastischen Kunststoffen mit Hilfe eines Treibmittels sieht vor, daß man als Treibmittel eine Zusammensetzung verwendet, die a) Pentafluorbutan, vorzugsweise 1,1,1,3,3-Pentafluorbutan (HFC-365mfc) und b) mindestens ein weiteres Treibmittel ausgewählt aus der Gruppe umfassend Difluormethan (HFC-32); Difluorethan, vorzugsweise 1,1-Difluorethan (HFC-152a); 1,1,2,2-Tetrafluorethan (HFC-134); 1,1,1,2-Tetrafluorethan (HPC-134a); Pentafluorpropan, vorzugsweise 1,1,1,3,3-Pentafluorpropan (HFC-245fa); Hexafluorpropan, vorzugsweise 1,1,2,3,3,3-Hexafluorpropan (HFC-236ea) oder 1,1,1,3,3,3-Hexafluorpropan (HFC-236fa); und Heptafluorpropan, vorzugsweise 1,1,1,2,3,3,3-Heptafluorpropan (HFC-227ea) enthält oder daraus besteht.

Gemäß einer Ausführungsform verwendet man ein Treibmittel, welches 1,1,1,3,3-Pentafluorbutan, 1,1,1,3,3-Pentafluorpropan sowie mindestens eines der unter b) genannten Treibmittel aufweist.

Bevorzugt ist die Ausführungsform, welche 1,1,1,3,3-Pentafluorbutan als unter a) genannte Komponente aufweist.

Das erfindungsgemäße Verfahren sieht deshalb bevorzugt vor, daß man als Treibmittel eine Zusammensetzung verwendet, die 1,1,1,3,3-Pentafluorbutan (HFC-365mfc) und mindestens ein weiteres Treibmittel ausgewählt aus der Gruppe umfassend Difluormethan (HFC-32); Difluorethan, vorzugsweise 1,1-Difluorethan (HFC-152a); 1,1,2,2-Tetrafluorethan (HFC-134); 1,1,1,2-Tetrafluorethan (HFC-134a); Pentafluorpropan, vorzugsweise 1,1,1,3,3-Pentafluorpropan (HFC-245fa); Hexafluorpropan, vorzugsweise 1,1,2,3,3,3-Hexafluorpropan (HFC-236ea) oder 1,1,1,3,3,3-Hexafluorpropan (HFC-236fa); und Heptafluorpropan, vorzugsweise 1,1,1,2,3,3,3-Heptafluorpropan (HFC-227ea) enthält oder daraus besteht.

Die Treibmittelzusammensetzungen enthalten 5 bis <50 Gew.-% 1,1,1,3,3-Pentafluorbutan, insbesondere 10 bis <50 Gew.-%.

Gut geeignet zur Anwendung im erfindungsgemäßen Verfahren sind auch Treibmittelzusammensetzungen, die zusätzlich zu HFC-365mfc und einem oder mehreren der oben unter b angegebenen Treibmittel, wie Fluorkohlenwasserstoffe, außerdem verflüssigtes Kohlendioxid enthalten. Vorzugsweise sind dann 2 bis 50 Gew.-% an CO₂ in der Treibmittelzusammensetzung enthalten. Außerdem kann die Treibmittelzusammensetzung noch bis zu 30 Gew.-% an Zusätzen enthalten, welche die Eigenschaften des herzustellenden Kunststoffes modifizieren.

Bevorzugte Treibmittelzusammensetzungen enthalten 1,1,1,3,3-Pentafluorbutan und Difluormethan und/oder 1,1-Difluorethan, oder sie bestehen aus diesen Verbindungen. Ganz besonders setzt man Zusammensetzungen ein, welche 10 bis <50 Gew.-% des HFC-365mfc und 90 bis >50 Gew.-% des HFC-152a und/oder HFC-32 enthalten oder daraus bestehen.

Im folgenden wird die Herstellung der PU-Hartschäume weiter erläutert.

Zu den hervorragend gut brauchbaren Flammschutzmitteln gehören beispielsweise reaktive Flammschutzmittel wie bromierte Polyole. Ebenfalls geeignet sind Flammschutzmittel auf Basis von organischen Phosphorverbindungen, beispielsweise Phosphatester und Phosphonester. Diese weisen organische Gruppen auf, die auch durch ein oder mehrere Halogenatome substituiert sein können. Die organischen Gruppen können aliphatischen oder aromatischen Charakter aufweisen. Sehr gut geeignet sind Phosphatester und Phosphonatester, die durch drei C1-C6-Alkylgruppen, die ein oder zwei Halogenatome aufweisen können, substituiert sind, beispielsweise Trischlorisopropylphosphat, Trischlorethylphosphat, Trischlorpropylphosphat, Dimethylethylphosphat, Trisdichlorisopropylphosphat, Dimethylmethylphosphonat, vorzugsweise Trischlorpropylphosphat.

Eine Ausführungsform des erfindungsgemäßen Verfahrens zur Herstellung von Polyurethanhartschaumstoffen sieht vor, daß, sofern a) HFC-365mfc und b) 1,1,1,2-Tetrafluorethan (HFC-134a); 1,1,1,3,3-Pentafluorpropan (HFC-245fa); 1,1,1,3,3,3-Hexafluorpropan (HFC-236fa); oder 1,1,1,2,3,3,3-Heptafluorpropan (HFC-227ea), aber kein CO₂, enthalten sind, die Treibmittelzusammensetzung weniger als 50 Gew.-% an 1,1,1,3,3-Pentafluorbutan und mehr als 50 Gew.-% an 1,1,1,2-Tetrafluorethan; 1,1,1,3,3-Pentafluorpropan; 1,1,1,3,3,3-Hexafluorpropan oder 1,1,1,2,3,3,3-Heptafluorpropan enthält oder daraus besteht.

Die effektive Menge an Treibmittelzusammensetzung, die man im erfindungsgemäßen Verfahren einsetzt, kann durch einfache Handversuche ermittelt werden. Vorteilhaft wird die Treibmittelzusammensetzung in einer Menge von 1 bis 50 Gew.-%, bezogen auf die Gesamtmischung aus zu verschäumendem Kunststoff bzw. den Vorprodukten (Polyol, Isocyanat, Hilfsmittel) und Treibmittelzusammensetzung, eingesetzt.

Ein weiterer Gegenstand der Erfindung sind im wesentlichen geschlossenzellige Polyurethanhartschaumstoffe, die durch einen Gehalt der im erfindungsgemäßen Verfahren anzuwendenden Treibmittelzusammensetzung in den Zellen gekennzeichnet ist.

Die Herstellung solcher Schaumstoffe und die dafür verwendbaren Grundmaterialien und die Art der Schaumherstellung werden in der europäischen Patentanmeldung EP-A-0 381 986; in "Ullmanns Encyclopedia of Industrial Chemistry", 5. Auflage, Band A21, Seiten 665 - 680; den internationalen Patentanmeldungen WO 92/00345, 96/30439, 96/14354 und der deutschen Offenlegungsschrift DE 44 22 714 A1 offenbart. Man setzt Polyisocyanate beispielsweise mit 2 bis 4 Isocyanat-Gruppen ein.

Sie weisen einen aliphatischen Kohlenwasserstoffrest mit bis zu 18 C-Atomen, einen cycloaliphatischen Kohlenwasserstoffrest mit bis zu 15 C-Atomen, einen aromatischen Kohlenwasserstoffrest mit 6 bis 15 C-Atomen oder einen araliphatischen Kohlenwasserstoffrest mit 8 bis 15 C-Atomen auf. Technisch besonders bevorzugte Ausgangskomponenten sind beispielsweise Diphenylmethandiisocyanat, Polymethylenpolyphenylisocyanat und deren Mischungen. Es können auch sogenannte "modifizierte Polyisocyanate" eingesetzt werden, welche Carbodiimidgruppen, Urethangruppen, Allophanatgruppen, Isocyanuratgruppen, Harnstoffgruppen oder Biuretgruppen enthalten.

Weitere Ausgangskomponenten sind Verbindungen mit mindestens 2 gegenüber Isocyanaten reaktionsfähigen Wasserstoffatomen. Es handelt sich insbesondere um Verbindungen mit einem Molekulargewicht von 400 bis 10.000, welche vorzugsweise 2 bis 8 Hydroxylgruppen aufweisen und außerdem Aminogruppen, Thiolgruppen oder Carboxylgruppen aufweisen können.

Gegebenenfalls können weitere Hilfs- und Zusatzmittel mitverwendet werden. Beispielsweise kann man zusätzlich chemische Treibmittel wie Wasser bzw. andere leicht flüchtige organische Substanzen als physikalisches Treibmittel einsetzen. Einsetzbar sind auch Katalysatoren wie beispielsweise tertiäre Amine, wie Dimethylcyclohexylamin, und/oder organische Metallverbindungen. Es können oberflächenaktive Zusatzstoffe wie Emulgatoren oder Schaumstabilisatoren, beispielsweise Siloxanpolyethercopolymere, Reaktionsverzögerer, Zellregler wie Paraffine, Fettalkohole oder Dimethylpolysiloxane, Pigmente, Farbstoffe, Flammschutzmittel wie Phosphatester oder Phosphonatester, wie beispielsweise Trischlorisopropylphosphat eingesetzt werden. Einsetzbar sind weiterhin Stabilisatoren gegen Alterungs- und Witterungseinflüsse, Weichmacher, Füllstoffe, Farbstoffe, Antistatika, Nukleisierungsmittel. Porenreglersubstanzen oder biozid wirksame Wirkstoffe.

Gut geeignete Katalysatoren sind beispielsweise in der internationalen Patentanmeldung WO 96/14354 genannt. Dazu zählen organische Amine, Aminoalkohole und Aminoether wie Morpholinverbindungen, beispielsweise Dimethylcyclohexylamin, Diethanolamin, 2-Dimethylaminoethyl-3-dimethylaminopropylether, 2-Dimethylaminoethylether, 2,2-Dimorpholinodiethylether, N,N-Dimethylaminoethylmorpholin, N-Dimethylmorpholin. Auch metallorganische Verbindungen wie beispielsweise Zinn-, Kobalt- oder Eisenverbindungen sind brauchbar als Katalysator. Einsetzbar ist beispielsweise Zinndioctoat, Kobaltnaphthenat, Dibutylzinndilaurat und Eisenacetonylacetat.

Die Treibmittel können Hilfs- und Zusatzstoffe enthalten wie Wasser, einen oder mehrere Katalysatoren, Flammschutzmittel, Emulgatoren, Schaumstabilisatoren, Bindemittel, Vernetzungsmittel, UV-Stabilisatoren, Nukleierungsmittel und gegebenenfalls weitere Treibgase. Das Treibmittel kann z. B. den Propolymeren aus Polyol und Poly- oder Diisocyanat zugesetzt werden, welches dann verschäumt wird.

Vorteilhaft am erfindungsgemäßen Verfahren ist zunächst, daß die angewendete Treibmittelzusammensetzung, die ebenfalls zur Erfindung gehört, günstige Eigenschaften im Hinblick auf ODP, GWP und Photosmog besitzt. Verglichen mit Polyurethanschaumstoffen, die mit reinen Kohlenwasserstoffen als Treibmittel hergestellt worden sind, zeichnen sich die nach dem erfindungsgemäßen Verfahren hergestellten Schaumstoffe durch eine bessere Wärmeleitzahl aus.

Ein besonderer Vorteil der nach dem erfindungsgemäßen Verfahren erhältlichen Polyurethanhartschaumstoffe kommt bei tieferen Temperaturen, zumeist unterhalb von etwa 15 °C, zum Tragen. Erstaunlicherweise besitzen die nach dem erfindungsgemäßen Verfahren erhältlichen Polyurethanhartschaumstoffe nicht nur eine günstigere Wärmeleitzahl (d. h. der Wärmeübergang ist niedriger) als Schaumstoffe, die aus reinen Kohlenwasserstoffen hergestellt wurden, sondern selbst gegenüber Schaumstoffen, die mit reinem Pentafluorbutan (HFC-365mfc) hergestellt worden sind, ist die Wärmeleitzahl geringer. In weitgehend geschlossenzelligen Polyurethanbartschaumstoffen, die mit Treibmittelgemischen, welche Pentafluorbutan, vorzugsweise 1,1,1,3,3-Pentafluorbutan und mindestens 1 der obengenannten weiteren Treibmittel aufweisen, macht sich bezüglich der Wärmeleitzahl, d. h. der Wärmedämmungsfähigkeit ein synergistischer Effekt der verwendeten Treibmittelmischungen bemerkbar. Die unter Verwendung von Pentafluorbutan, vorzugsweise HFC-365mfc und mindestens einem weiteren der oben angegebenen Treibmittel erhältlichen Polyurethanhartschaumstoffe eignen sich infolgedessen besonders gut zur Dämmung gegen Kälte in einem Temperaturbereich unterhalb von etwa 15 °C.

Im folgenden wird die Herstellung thermoplastischer Schäume weiter erläutert.

Mit dem erfindungsgemäßen Verfahren kann man beispielsweise die in den oben erwähnten US-Patenten 5,204,169 und 5,276,063 genannten thermoplastischen Kunststoffe auf Basis von polymeren Alkenylaromaten und die in der EP-A-0 436 847 genannten thermoplastischen, auf Basis von Polyphenylenether-Verbindungen basierenden Kunststoffe verschäumen. Verschäumbar sind auch thermoplastische Kunststoffe auf Basis von Polyethylen, Polyvinylchlorid (PVC) und Polyethylenterephthalat (PET) und Polypropylen. Besonders bevorzugt setzt man im erfindungsgemäßen Verfahren zu verschäumende thermoplastische Kunststoffe auf Basis von Polystyrol, Polyethylen und Polypropylen ein. Ganz besonders bevorzugt ist es, als thermoplastischen Kunststoff Polystyrol einzusetzen.

Eine Ausführungsform des erfindungsgemäßen Verfahrens zur Herstellung von Kunststoffen auf Basis von Polystyrol oder Polyethylen sieht vor, daß, sofern a) HFC-365mfc und b) 1,1,1,2-Tetrafluorethan (HFC-134a); 1,1,1,3,3-Pentafluorpropan (HFC-245fa); 1,1,1,3,3,3-Hexafluorpropan (HFC-236fa); oder 1,1,1,2,3,3,3-Heptafluorpropan (HFC-227ea), aber kein CO₂ enthalten sind, die Treibmittelzusammensetzung weniger als 50 Gew.-% an 1,1,1,3,3-Pentafluorbutan und mehr als 50 Gew.-% an 1,1,1,2-Tetrafluorethan; 1,1,1,3,3-Pentafluorpropan; 1,1,1,3,3,3-Hexafluorpropan oder 1,1,1,2,3,3,3-Heptafluorpropan enthält oder daraus besteht. Die gleiche Maßgabe gilt auch für diese Ausführungsform, sofern kein weiteres Treibmittel aus der Gruppe der niedrigsiedenden, gegebenenfalls halogenierten Kohlenwasserstoffe, Chlor und Halogenether enthalten ist. Bezüglich bevorzugter Treibmittel gelten die oben für PU-Schäume gemachten Ausführungen.

Vorteilhaft wird die Treibmittelzusammensetzung in einer Menge von 1 bis 30 Gew.-%, bezogen auf die Gesamtmischung aus zu verschäumendem thermoplastischem Kunststoff und Treibmittelzusammensetzung, eingesetzt.

Ein weiterer Gegenstand der vorliegenden Erfindung ist eine Treibmittelzusammensetzung, die im erfindungsgemäßen Verfahren eingesetzt werden kann. Sie enthält oder besteht aus a) Pentafluorbutan, vorzugsweise 1,1,1,3,3-Pentafluorbutan (HFC-365mfc) und b) mindestens ein weiteres Treibmittel ausgewählt aus der Gruppe umfassend Difluormethan (HFC-32); Difluorethan, vorzugsweise 1,1-Difluorethan (HFC-152a); Hexafluorpropan, vorzugsweise 1,1,2,3,3,3-Hexafluorpropan (HFC-236ea) oder 1,1,1,3,3,3-Hexafluorpropan (HFC-236fa); und Heptafluorpropan, vorzugsweise 1,1,1,2,3,3;3-Heptafluorpropan (HFC-227ea). Eine bevorzugte Zusammensetzung enthält oder besteht aus: a) 1,1,1,3,3-Pentafluorbutan-(HFC-365mfc) und b) mindestens ein weiteres Treibmittel ausgewählt aus der Gruppe umfassend Difluormethan (HFC-32); Difluorethan (HFC-152a); 1,1,1,3,3,3-Hexafluorpropan (HFC-236fa); und 1,1,1,2,3,3,3-Heptafluorpropan (HFC-227ea). Sie enthält 5 bis <50 Gew.-%, insbesondere 10 bis <50 Gew.-% an 1,1,1,3,3-Pentafluorbutan (HFC-365mfc).

Sehr gut geeignete Zusammensetzungen enthalten oder bestehen aus: HFC-365mfc und HFC-152a; HFC-365mfc und HFC-32; HFC-365mfc, HF-152a und CO₂; HFC-365mfc, HFC-32 und CO₂; HFC-365mfc, HFC-32 und HFC-134a.

Gemäß einer bevorzugten Ausführungsform enthält die Treibmittelzusammensetzung 1,1,1,3,3-Pentafluorbutan (HFC-365mfc) und Difluormethan und/oder 1,1-Difluorethan (HFC-152a), oder sie besteht aus diesen Verbindungen. Insbesondere sind 10 bis <50 Gew.-% 1,1,1,3,3-Pentafluorbutan und 90 bis <50 Gew.-% 1,1-Difluorethan oder Difluormethan enthalten, oder sie besteht aus diesen Komponenten in den angegebenen Mengenbereichen.

Die Treibmittelzusammensetzung kann auch noch 2 bis 50 Gew.-% verflüssigtes Kohlendioxid enthalten.

Eine Ausführungsform der Treibmittelzusammensetzung sieht vor, daß, sofern a) HFC-365mfc und b) 1,1,1,3,3,3-Hexafluorpropan (HFC-236fa; oder 1,1,1,2,3,3,3-Heptafluorpropan (HFC-227ea), aber kein CO₂ enthalten sind, die Treibmittelzusammensetzung weniger als 50 Gew.-% an 1,1,1,3,3-Pentafluorbutan und mehr als 50 Gew.-% an 1,1,1,3,3,3-Hexafluorpropan oder 1,1,1,2,3,3,3-Heptafluorpropan enthält oder daraus besteht.

Ein weiterer Gegenstand der Erfindung sind im wesentlichen geschlossenzellige, geschäumte Kunststoffe, die durch einen Gehalt der erfindungsgemäßen Treibmittelzusammensetzung in den Zellen gekennzeichnet sind. Insbesondere handelt es sich um im wesentlichen geschlossenzellige, geschäumte, thermoplastische Kunststoffe, vorzugsweise auf Basis von Polystyrol, Polyethylen, Polypropylen, PVC oder PET, insbesondere Polystyrol.

Die mit dem erfindungsgemäßen Verfahren erhältlichen thermoplastischen Hartschaumstoffe weisen den Vorteil auf, daß sie, verglichen mit der Verwendung von beispielsweise HFC-134a als Treibmittel, eine verbesserte Geschlossenzelligkeit aufweisen. Bei Polystyrol ist eine verbesserte Verarbeitbarkeit der Polystyrolschmelze im Vergleich zu der alleinigen Verwendung von HFC-134a festzustellen. Die erfindungsgemäßen Treibmittel weisen eine ausreichende Löslichkeit auf. Die erfindungsgemäßen Treibmittel haben kein ODP und ein geringes GWP. Der Einfluß auf die Bildung von Photosmog ist äußerst gering.

Ein besonderer Vorteil der erfindungsgemäßen Hartschaumstoffe sind verbesserte Eigenschaften in bezug auf die Wärmeleitfähigkeit. In den Zellen des Schaumstoffes ist, verglichen mit der alleinigen Verwendung von HFC-134a, HFC-152a und HFC-32 als Treibmittel, ein erhöhter Restgehalt an Treibmittel vorhanden.

Die folgenden Beispiele sollen die Erfindung weiter erläutern.

### Beispiel 1: (nicht erfindungsgemäß)

### Herstellung von PU-Schaumstoffen

Zur Herstellung des PUR-Schaumstoffes wurde als eine Ausgangskomponente eine Polyolmischung, bestehend aus 40 Gewichtsteilen eines Ethylendiamin/Propylenoxid-Polyethers (OH-Zahl 480), 60 Gewichtsteile eines Sorbitol/Glycerin/Propylenoxid-Polyethers (OHZ 490), 1 Gewichtsteil Schaumstabilisator (Typ DC 193 der Dow Corning Corp.) und 1,5 Gewichtsteile Dimethylcyclohexylamin eingesetzt. Diphenylmethandiisocyanat wurde als Isocyanatkomponente in einer um 10 Gew.-% erhöhten stöchiometrischen Menge eingesetzt.

Die PUR-Schaumstoffe wurden auf einer Niederdruckanlage mit einer Austragsleistung von ca. 8 kg/min, mit der eine Dosierung von 3 Komponenten möglich ist, hergestellt. Als Mischaggregat diente ein statischer Mischer.
a) Verwendung von HFC-365mfc/152a
   Erfindungsgemäß wurde eine Treibmittelzusammensetzung in einer Menge von 30 Gewichtsteilen, bezogen auf Polyolkomponente, eingesetzt. Erfindungsgemäß bestand die Treibmittelzusammensetzung aus 70 Gewichtsteilen HFC-365mfc und 30 Gewichtsteilen HFC-152a. Zusätzlich wurde 1 Gewichtsteil Wasser als chemisches Treibmittel mitverwendet. Mit der erfindungsgemäßen Treibmittelzusammensetzung wurde ein PUR-Hartschaumstoff mit einer feinzelligen Struktur und einer Dichte von ca. 32 kg/m³ mit geringer Schrumpfung hergestellt.
b) Verwendung von HFC-365mfc/32
   Erfindungsgemäß wurde eine Treibmittelzusammensetzung in einer Menge von 30 Gewichtsteilen, bezogen auf Polyolkomponente, eingesetzt. Erfindungsgemäß bestand die Treibmittelzusammensetzung aus 80 Gewichtsteilen HFC-365mfc und 20 Gewichtsteilen HFC-32. Zusätzlich wurde 1 Gewichtsteil Wasser als chemisches Treibmittel mitverwendet. Mit dieser erfindungsgemäßen Treibmittelzusammensetzung wurde ein PUR-Hartschaumstoff mit einer feinzelligen Struktur und einer Dichte von ca. 28 kg/m³ mit geringer Schrumpfung hergestellt.
c) Verwendung von HFC-365mfc/152a/CO₂
   Erfindungsgemäß wurde eine Treibmittelzusammensetzung in einer Menge von 22 Gewichtsteilen, bezogen auf Polyolkomponente, eingesetzt. Erfindungsgemäß bestand die Treibmittelzusammensetzung aus 70 Gewichtsteilen HFC-365mfc und 30 Gewichtsteilen HFC-152a. Zusätzlich zur erfindungsgemäßen Treibmittelzusammensetzung wurde gemäß - DE 44 39 082 - 8 Gewichtsteile verflüssigtes Kohlendioxid mitverwendet. Ferner wurde 1 Gewichtsteil Wasser als chemisches Treibmittel mitverwendet.
   Mit der erfindungsgemäßen Treibmittelzusammensetzung wurde ein PUR-Hartschaumstoff mit einer feinzelligen Struktur und einer Dichte von ca. 26 kg/m³ mit geringer Schrumpfung hergestellt.

### Beispiel 2:

### Herstellung eines Polystyrol-Schaumstoffes

a) Verwendung von HFC-365mfc/152a
   Es wurden 200 kg Polystyrol (Schmelzindex 3,0 - 110) mit 2 kg Talkum als Nukleierungsmittel vermischt und diese Mischung in eine übliche Extruderanlage eindosiert und aufgeschmolzen. In die Schmelzzone des Extruders wurden über eine Einspritzdüse in die Polystyrolschmelze ca. 8 Gew.-% eines erfindungsgemäßen Treibmittels, bezogen auf das Polystyrol, eindosiert. Die erfindungsgemäße Treibmittelmischung enthielt 30 Gew.-% HFC-365mfc und 70 Gew.-% HFC-152a.
   In der Mischzone wurde die Polystyrolschmelze mit der erfindungsgemäßen Treibmittelzusammensetzung homogen vermischt und anschließend die erhaltene Mischung über eine Düse extrudiert. Man erhielt einen geschlossenzelligen Schaumstoff von gleichmäßiger, feinzelliger Struktur.
   Es wurden sowohl Polystyrol-Schaumfolien als auch Polystyrol-Schaumplatten erfindungsgemäß hergestellt. Eine erfindungsgemäß hergestellte Polystyrol-Schaumfolie besaß eine Dichte von 38 kg/m³, eine erfindungsgemäß hergestellte Polystyrol-Schaumplatte eine Dichte von 35 kg/m³.
b) Verwendung von HFC-365mfc/32
   Wie unter Beispiel 2a) beschrieben, wurde in eine Polystyrolschmelze ca. 6 Gew.-% eines erfindungsgemäßen Treibmittels, bezogen auf Polystyrol, eindosiert. Die erfindungsgemäße Treibmittelzusammensetzung enthielt 30 Gew.-% HFC-365mfc und 70 Gew.-% HFC-32.
   Eine erfindungsgemäß hergestellte Polystyrolfolie besaß eine Dichte von 42 kg/m³, eine erfindungsgemäß hergestellte Polystyrol-Schaumplatte eine Dichte von 39 kg/m³.
c) Verwendung von HFC-365mfc/134a/152a
   Wie unter Beispiel 2a) beschrieben, wurde in eine Polystyrolschmelze ca. 8,5 Gew.-% eines erfindungsgemäßen Treibmittels, bezogen auf Polystyrol, eindosiert. Die erfindungsgemäße Treibmittelzusammensetzung enthielt 30 Gewichtsteile HFC-365mfc, 14 Gewichtsteile HFC-134a und 56 Gewichtsteile HFC-152a.
   Eine erfindungsgemäß hergestellte Polystyrolfolie besaß eine Dichte von 40 kg/m³, eine erfindungsgemäß hergestellte Polystyrol-Schaumplatte eine Dichte von 38 kg/m³.
d) Verwendung von HFC-365mfc/152a/CO₂
   Wie unter Beispiel 2a) beschrieben, wurde in eine Polystyrolschmelze ca. 5,5 Gew.-% eines erfindungsgemäßen Treibmittels, bezogen auf Polystyrol, eindosiert. Die erfindungsgemäße Treibmittelzusamrnensetzung enthielt 30 Gewichtsteile HFC-365mfc, 70 Gewichtsteile HFC-152a. Zusätzlich zur erfindungsgemäßen Treibmittelzusammensetzung wurde gemäß - DE 44 39 082 - 8 Gewichtsteile verflüssigtes Kohlendioxid mitverwendet.
   Eine erfindungsgemäß hergestellte Polystyrolfolie besaß eine Dichte von 36 kg/m³, eine erfindungsgemäß hergestellte Polystyrol-Schaumplatte eine Dichte von 33 kg/m³.

### Beispiel 3:

### Herstellung eines Polyethylen-Schaumstoffes

a) Verwendung von HFC-365mfc/152a
   200 kg Polyethylen (Schmelzindex 3,5 - 150) wurden unter ähnlichen Bedingungen, wie in Beispiel 2 für Polystyrol beschrieben, extrudiert. Es wurden ca. 9 Gewichtsteile einer Treibmittelmischung, bezogen auf Polyethylen, eindosiert. Erfindungsgemäß wurde eine Treibmittelzusammensetzung aus 30 Gewichtsteilen HFC-365mfc und 70 Gewichtsteilen HFC-152a eingesetzt. Es wurde ein feinzelliger Polyethylen-Schaumstoff mit geringer Schrumpfung erhalten. Das erfindungsgemäß hergestellte Polyethylen-Schaumrohr wies eine Dichte von 38 kg/m³ auf.

## Patentansprüche

1. Verfahren zur Herstellung von Polyurethanhartschäumen und von geschäumten thermoplastischen Kunststoffen durch Verschäumen eines thermoplastischen Kunststoffes mit Hilfe eines Treibmittels, **dadurch gekennzeichnet, daß** man als Treibmittel eine Zusammensetzung verwendet, die a) 5 bis <50 Gew.-% Pentafluorbutan, vorzugsweise 1,1,1,3,3-Pentafluorbutan (HFC-365mfc) und b) mindestens ein weiteres Treibmittel ausgewählt aus der Gruppe umfassend Difluormethan (HFC-32); Difluorethan, vorzugsweise 1,1-Difluorethan (HFC-152a); 1,1,2,2-Tetrafluorethan (HFC-134); 1,1,1,2-Tetrafluorethan (HFC-134a); Pentafluorpropan, vorzugsweise 1,1,1,3,3-Pentafluorpropan (HFC-245fa); Hexafluorpropan, vorzugsweise 1,1,2,3,3,3-Hexafluorpropan (HFC-236ea) oder 1,1,1,3,3,3-Hexafluorpropan (HFC-236fa); Heptafluorpropan, vorzugsweise 1,1,1,2,3,3,3-Heptafluorpropan (HPC-227ea) enthält oder daraus besteht.

2. Verfahren nach Anspruch 1, **dadurch gekennzeichnet, daß** man als Treibmittel eine der folgenden Zusammensetzungen einsetzt, die enthalten oder bestehen aus: HFC-365mfc und HFC-152a; HFC-365mfc und HFC-32; HFC-365-mfc, HFC-152a und CO₂; HFC-365mfc, HFC-32 und CO₂; HFC-365mfc, HFC-152a und HFC-134a; HFC-365mfc, HFC-32 und HFC-134a.

3. Verfahren nach Anspruch 2, **dadurch gekennzeichnet, daß** man Zusammensetzungen einsetzt, die 10 bis <50 Gew.-% HFC-365mfc und 90 bis >50 Gew.-% der anderen Komponente(n), insbesondere HFC-32 und/oder HFC-152a enthalten oder daraus bestehen.

4. Verfahren nach Anspruch 1, **dadurch gekennzeichnet, daß** die Treibmittelzusammensetzung zusätzlich 2 bis 50 Gew.-% CO₂ enthält.

5. Verfahren nach Anspruch 1, **dadurch gekennzeichnet, daß** die Treibmittelzusammensetzung bis zu 30 Gew.-% an die Eigenschaften des Kunststoffes modifizierende Zusätze enthält, insbesondere Flammschutzmittel oder Weichmacher.

6. Verfahren nach Anspruch 1, **dadurch gekennzeichnet, daß** man als thermoplastischen Kunststoff Polystyrol, Polyethylen, Polypropylen, Polyvinylchlorid oder PET (Polyethylenterephthalat), einsetzt.

7. Verfahren nach Anspruch 6, **dadurch gekennzeichnet, daß** man als thermoplastischen Kunststoff Polystyrol einsetzt.

8. Verfahren nach Anspruch 1, **dadurch gekennzeichnet, daß** man die Treibmittelzusammensetzung in einer Menge von 1 bis 30 Gew.-%, bezogen auf die Gesamtmischung aus zu verschäumendem thermoplastischem Kunststoff und Treibmittelzusammensetzung, einsetzt.

9. Verfahren nach Anspruch 1, **dadurch gekennzeichnet, daß** man die Treibmittelzusammensetzung in einer Menge von 1 bis 50 Gew.-%, bezogen auf die Gesamtmischung aus Polyurethan und Treibmittelzusammensetzung, einsetzt.

10. Treibmittelzusammensetzung, enthaltend oder bestehend aus: a) 5 bis <50 Gew.-% Pentafluorbutan, vorzugsweise 1,1,1,3,3-Pentafluorbutan (HFC-365mfc) und b) >50 bis 95 Gew.-% mindestens ein weiteres Treibmittel ausgewählt aus der Gruppe umfassend Difluormethan (HFC-32); Difluorethan, vorzugsweise 1,1-Difluorethan (HFC-152a); Hexafluorpropan, vorzugsweise 1,1,2,3,3,3-Hexafluorpropan (HFC-236ea) oder 1,1,1,3,3,3-Hexafluorpropan (HFC-236fa); und Heptafluorpropan 1,1,1,2,3,3,3-Heptafluorpropan (HFC-227ea).

11. Treibmittelzusammensetzung nach Anspruch 10, enthaltend oder bestehend aus: HFC-365mfc und HFC-152a; HFC-365mfc und HFC-32; HFC-365mfc, HFC-152a und CO₂; HFC-365mfc, HFC-32 und CO₂; HFC-365mfc, HFC-32 und HFC-134a.

12. Treibmittelzusammensetzung nach Anspruch 10, **dadurch gekennzeichnet, daß** sie 10 bis <50 Gew.-% 1,1,1,3,3-Pentafluorbutan (HFC-365mfc) und 90 bis >50 Gew.-% der anderen Komponente(n), vorzugsweise Difluormethan (HFC-32) und/oder 1,1-Difluorethan (HFC-152a) enthalten oder daraus bestehen.

13. Treibmittelzusammensetzung nach Anspruch 10, **dadurch gekennzeichnet, daß** sie 2 bis 50 Gew.-% verflüssigtes CO₂ enthält.

14. Treibmittelzusammensetzung nach Anspruch 10, mit der Maßgabe, daß, sofern a) 1,1,1,3,3-Pentafluorbutan und b) 1,1,1,3,3,3-Hexafluorpropan (HFC-236fa); oder 1,1,1,2,3,3,3-Heptafluorpropan (HFC-227ea), aber kein CO₂ enthalten sind, die Treibmittelzusammensetzung weniger als 50 Gew.-% an 1,1,1,3,3-Pentafluorbutan und mehr als 50 Gew.-% an 1,1,1,3,3,3-Hexafluorpropan oder 1,1,1,2,3,3,3-Heptafluorpropan enthält oder daraus besteht.

15. Verfahren nach Anspruch 1 zur Herstellung von geschäumten Kunststoffen auf Basis von Polystyrol oder Polyethylen, mit der Maßgabe, daß, sofern a) 1,1,1,3,3-Pentafluorbutan und b) 1,1,1,2-Tetrafluorethan (HFC-134a); 1,1,1,3,3-Pentafluorpropan (HFC-245fa); 1,1,1,3,3,3-Hexafluorpropan (HFC-236fa); oder 1,1,1,2,3,3,3-Heptafluorpropan (HFC-227ea), aber kein CO₂ enthalten sind, die Treibmittelzusammensetzung weniger als 50 Gew.-% an 1,1,1,3,3-Pentafluorbutan und mehr als 50 Gew.-% an 1,1,1,2-Tetrafluorethan; 1,1,1,3,3-Pentafluorpropan; 1,1,1,3,3,3-Hexafluorpropan oder 1,1,1,2,3,3,3-Heptafluorpropan enthält oder daraus besteht.

16. Vorwiegend geschlossenzellige Polyurethanhartschäume oder geschäumte thermoplastische Kunststoffe, **gekennzeichnet durch** einen Gehalt einer Treibmittelzusammensetzung, die a) Pentafluorbutan, vorzugsweise 1,1,1,3,3-Pentafluorbutan (HFC-365mfc), und b) mindestens ein weiteres Treibmittel ausgewählt aus der Gruppe umfassend Difluormethan (HFC-32); Difluorethan, vorzugsweise 1,1-Difluorethan (HFC-152a); 1,1,2,2-Tetrafluorethan (HFC-134); 1,1,1,2-Tetrafluorethan (HFC-134a); Pentafluorpropan, vorzugsweise 1,1,1,3,3-Pentafluorpropan (HFC-245fa); Hexafluorpropan, vorzugsweise 1,1,2,3,3,3-Hexafluorpropan (HFC-236ea) oder 1,1,1,3,3,3-Hexafluorpropan (HFC-236fa); Heptafluorpropan, vorzugsweise 1,1,1,2,3,3,3-Heptafluorpropan (HFC-227ea) enthält oder daraus besteht.

17. vorwiegend geschlossenzellige Polyurethanhartschäume oder geschäumte thermoplastische Kunststoffe nach Anspruch 16, **gekennzeichnet durch** einen Gehalt einer Treibmittelzusammensetzung, die a) 5 bis < 50 Gew.-% Pentafluorbutan, vorzugsweise 1,1,1,3,3-Pentafluorbutan (HFC-365mfc), und b) > 50 bis 95 Gew.-% mindestens eines weiteren Treibmittels ausgewählt aus der Gruppe umfassend Difluormethan (HFC-32); Difluorethan, vorzugsweise 1,1-Difluorethan (HFC-152a); 1,1,2,2-Tetrafluorethan (HFC-134); 1,1,1,2-Tetrafluorethan (HFC-134a); Pentafluorpropan, vorzugsweise 1,1,1,3,3-Pentafluorpropan (HFC-245fa); Hexafluorpropan, vorzugsweise 1,1,2,3,3,3-Hexafluorpropan (HFC-236ea) oder 1,1,1,3,3,3-Hexafluorpropan (HFC-236fa); Heptafluorpropan, vorzugsweise 1,1,1,2,3,3,3-Heptafluorpropan (HFC-227ea) enthält oder daraus besteht.

18. Treibmittelgemisch, verwendbar zur Herstellung von PU-Hartschaumstoffen mit verbesserten Eigenschaften bezüglich der Wärmeleitfähigkeit bei tiefen Temperaturen, enthaltend oder bestehend aus 5 bis <50 Gew.-% 1,1,1,3,3-Pentafluorbutan und >50 bis 95 Gew.-% mindestens eines Fluorkohlenwasserstoffes ausgewählt aus der Gruppe bestehend aus 1,1,1,3,3,3-Hexafluorpropan und 1,1,1,2,3,3,3-Heptafluorpropan.

## Claims

1. A process for the production of rigid polyurethane foams and of foamed thermoplastic materials by foaming a thermoplastic material with the aid of a blowing agent, **characterised in that** a composition is used as blowing agent which contains or consists of a) 5 to <50% by weight pentafluorobutane, preferably 1,1,1,3,3-pentafluorobutane (HFC-365mfc) and b) at least one further blowing agent selected from the group comprising difluoromethane (HFC-32); difluoroethane, preferably 1,1-difluoroethane (HFC-152a); 1,1,2,2-tetrafluoroethane (HFC-134); 1,1.1,2-tetrafluoroethane (HFC-134a); pentafluoropropane, preferably 1,1,1,3,3-pentafluoropropane (HFC-245fa); hexafluoropropane, preferably 1,1,2,3,3,3-hexafluoropropane (HFC-236ea) or 1,1,1 ,3,3,3-hexafluoropropane (HFC-236fa) or heptafluoropropane, preferably 1,1,1,2,3,3,3-heptafluoropropane (HFC-227ea).

2. A process according to Claim 1, **characterised in that** one of the following compositions which contain or consist of: HFC-365mfc and HFC-152a; HFC-365mfc and HFC-32; HFC-365-mfc, HFC-152a and CO₂; HFC-365mfc, HFC-32 and CO₂; HFC-365mfc, HFC-152a and HFC-134a; HFC-365mfc, HFC-32 and HFC-134a is used as blowing agent.

3. A process according to Claim 2, **characterised in that** compositions are used which contain or consist of 10 to <50% by weight HFC-365mfc and 90 to >50% by weight of the other constituent(s), in particular HFC-32 and/or HFC-152a.

4. A process according to Claim 1, **characterised in that** the blowing agent composition additionally contains 2 to 50% by weight CO₂.

5. A process according to Claim 1, **characterised in that** the blowing agent composition contains up to 30% by weight of additives which modify the properties of the plastics material, in particular flameproofing agents or plasticisers.

6. A process according to Claim 1, **characterised in that** polystyrene, polyethylene, polypropylene, polyvinyl chloride or PET (polyethylene terephthalate) are used as thermoplastic material.

7. A process according to Claim 6, **characterised in that** polystyrene is used as thermoplastic material.

8. A process according to Claim 1, **characterised in that** the blowing agent composition is used in an amount from 1 to 30% by weight, relative to the total mixture of thermoplastic material to be foamed and blowing agent composition.

9. A process according to Claim 1, **characterised in that** the blowing agent composition is used in an amount from 1 to 50% by weight, relative to the total mixture of polyurethane and blowing agent composition.

10. A blowing agent composition, containing or consisting of: a) 5 to <50% by weight pentafluorobutane, preferably 1,1,1,3,3-pentafluorobutane (HFC-365mfc) and b) >50 to 95% by weight of at least one further blowing agent selected from the group comprising difluoromethane (HFC-32); 1,1-difluoroethane, preferably 1,1 difluoroethane (HFC-152a); hexafluoropropane, preferably 1,1,2,3,3,3-hexafluoropropane (HFC-236ea) or 1,1,1,3,3,3-hexafluoropropane (HFC-236fa); and heptafluoropropane 1,1,1,2,3,3,3-heptafluoropropane (HFC-227ea).

11. A blowing agent composition according to Claim 10, containing or consisting of: HFC-365mfc and HFC-152a; HFC-365mfc and HFC-32; HFC-365mfc, HFC-152a and CO₂; HFC-365mfc, HFC-32 and CO₂; HFC-365mfc, HFC-32 and HFC-134a.

12. A blowing agent composition according to Claim 10, **characterised in that** it contains or consists of 10 to <50 % by weight 1,1,1,3,3-pentafluorobutane (HFC-365mfc) and 90 to >50% by weight of the other constituent(s), preferably difluoromethane (HFC-32) and/or 1,1-difluoroethane (HFC-152a).

13. A blowing agent composition according to Claim 10, **characterised in that** it contains 2 to 50% by weight liquefied C0₂.

14. A blowing agent composition according to Claim 10, with the proviso that where a) 1,1,1,3,3-pentafluorobutane and b) 1,1,1,3,3,3-hexafluoropropane (HFC-236fa); or 1,1,1,2,3,3,3-heptafluoropropane (HFC-227ea), but no C0₂ is contained therein, the blowing agent composition contains or consists of less than 50% by weight 1,1,1,3,3-pentafluorobutane and more than 50% by weight 1,1,1,3,3,3-hexafluoropropane or 1,1,1,2,3,3,3-heptafluoropropane.

15. A process according to Claim 1 for the production of foamed plastics based on polystyrene or polyethylene, with the proviso that, where a) 1,1,1,3,3-pentafluorobutane and b) 1,1,1,2-tetrafluoroethane (HFC-134a); 1,1,1,3,3-pentafluoropropane (HFC-245fa); 1,1,1,3,3,3-hexafluoropropane (HPC-236fa); or 1,1,1,2,3,3,3-heptafluoropropane (HFC-227ea), but no CO₂ is contained therein, the blowing agent composition contains or consists of less than 50% by weight of 1,1,1,3,3-pentafluorobutane and more than 50% by weight of 1,1,1,2-tetrafluoroethane; 1,1,1,3,3-pentafluoropropane; 1,1,1,3,3,3-hexafluoropropane or 1,1,1,2,3,3,3-heptafluoropropane.

16. Predominantly closed-cell rigid polyurethane foams or foamed thermoplastic materials, **characterised by** a content of a blowing agent composition which contains or consists of a) pentafluorobutane, preferably 1,1,1,3,3-pentafluorobutane (HFC-365mfc), and b) at least one further blowing agent selected from the group comprising difluoromethane (HFC-32); difluoroethane, preferably 1,1-difluoroethane (HFC-152a); 1,1,2,2-tetrafluoroethane (HFC-134); 1,1,1,2-tetrafluoroethane (HFC-134a); pentafluoropropane, preferably 1,1,1,3,3-pentafluoropropane (HFC-245fa); hexafluoropropane, preferably 1,1,2,3,3,3-hexafluoropropane (HFC-236ea) or 1,1,1,3,3,3-hexafluoropropane (HFC-236fa) or heptafluoropropane, preferably 1,1,1,2,3,3,3-heptafluoropropane (HFC-227ea).

17. Predominantly closed-cell rigid polyurethane foams or foamed thermoplastic materials according to Claim 16, **characterised by** a content of a blowing agent composition which contains or consists of a) 5 to <50% by weight pentafluorobutane, preferably 1,1,1,3,3-pentafluorobutane (HFC-365mfc), and b) > 50 to 95% by weight of at least one further blowing agent selected from the group comprising difluoromethane (HFC-32); difluoroethane, preferably 1,1-difluoroethane (HFC-152a); 1,1,2,2-tetrafluoroethane (MFC-134); 1,1,1,2-tetrafluoroethane (HFC-134a); pentafluoropropane, preferably 1,1,1,3,3-pentafluoropropane (HFC-245fa); hexafluoropropane, preferably 1,1,2,3,3,3-hexafluoropropane (HFC-236ea) or 1,1,1,3,3,3-hexafluoropropane (HFC-236fa), and heptafluoropropane, preferably 1,1,1,2,3,3,3-heptafluoropropane (HFC-227ea).

18. A blowing agent mixture, usable for the production of rigid polyurethane foams having improved properties with regard to thermal conductivity at low temperatures, containing or consisting of 5 to <50% by weight 1,1,1,3,3-pentafluorobutane and >50 to 95% by weight of at least one fluorohydrocarbon selected from the group consisting of 1,1,1,3,3,3-hexafluoropropane and 1.1,1,2,3,3,3-heptafluoropropane.

## Revendications

1. Procédé de préparation de mousses rigides de polyuréthane et de matériaux synthétiques thermoplastiques expansés par moussage d'un matériau synthétique thermoplastique à l'aide d'un agent porogène, **caractérisé en ce qu'**on utilise en tant qu'agent porogène une composition qui contient a) 5 à < 50 % en poids d'un pentafluorobutane, de préférence le 1,1,1,3,3-pentafluorobutane (HFC-365mfc), et b) au moins un autre agent porogène choisi dans l'ensemble comprenant le difluorométhane (HFC-32) ; un difluoroéthane, de préférence le 1,1-difluoroéthane (HFC-152a) ; le 1,1,2,2-tétrafluoroéthane (HFC-134) ; le 1,1,1,2-tétrafluoroéthane (HFC-134a) ; un pentafluoropropane, de préférence le 1,1,1,3,3-pentafluoropropane (HFC-245fa) ; un hexafluoropropane, de préférence le 1,1,2,3,3,3-hexafluoropropane (HFC-236ea) ou le 1.1,1,3,3,3-hexafluoropropane (HFC-236fa) ; un heptafluoropropane, de préférence le 1,1,1,2,3,3,3-heptaflnoropropane (HFC-227ea), ou qui en est constituée.

2. Procédé selon la revendication 1, **caractérisé en ce qu'**on utilise en tant qu'agent porogène l'une des compositions suivantes, qui contiennent : le HFC-365mfc et le HFC-152a ; le HFC-365mfc et le HFC-32 ; le HFC-365mfc, le HFC-152a et du CO₂ ; le HFC-365mfc, le HFC-32 et du CO₂ ; le HPC-365mfc, le HFC-152a et le HFC-134a ; le HFC-365mfc, le HFC-32 et le HFC-134a ; ou qui en sont constituées.

3. Procédé selon la revendication 2, **caractérisé en ce qu'**on utilise des compositions qui contiennent 10 à < 50 % en poids de HFC-365mfc et 90 à > 50 % en poids du ou des autres composants, en particulier le HFC-32 et/ou le HFC-152a, ou qui en sont constituées.

4. Procédé selon la revendication 1, **caractérisé en ce que** la composition formant agent porogène contient en outre 2 à 50 % en poids de CO₂.

5. Procédé selon la revendication 1, **caractérisé en ce que** la composition formant agent porogène contient jusqu'à 30 % en poids d'additifs modifiant les propriétés du matériau plastique, en particulier des agents d'ignifugation ou des plastifiants.

6. Procédé selon la revendication 1, **caractérisé en ce qu'**on utilise en tant que matériau synthétique thermoplastique du polystyrène, du polyéthylène, du polypropylène, du poly(chlorure de vinyle) ou du PET (poly(téréphtalate d'éthylène)).

7. Procédé selon la revendication 6, **caractérisé en ce qu'**on utilise du polystyrène en tant que matériau synthétique thermoplastique.

8. Procédé selon la revendication 1, **caractérisé en ce qu'**on utilise la composition formant agent porogène en une quantité de 1 à 30 % en poids par rapport au poids total du matériau synthétique thermoplastique devant être expansé et de la composition formant agent porogène.

9. Procédé selon la revendication 1, **caractérisé en ce qu'**on utilise la composition formant agent porogène en une quantité de 1 à 50 % en poids par rapport au poids total du polyuréthane et de la composition formant agent porogène.

10. Composition formant agent porogène, qui contient a) 5 à < 50 % en poids d'un pentafluorobutane, de préférence le 1,1,1,3,3-pentafluorobutane (HFC-365mfc) et b) > 50 à 95 % en poids d'au moins un autre agent porogène choisi dans l'ensemble comprenant le difluorométhane (HFC-32) ; un difluoroéthane, de préférence le 1,1-difluoroéthane (HFC-152a) ; un hexafluoropropane, de préférence le 1,1,2,3,3,3-hexafluoropropane (HFC-236ea) ou le 1,1,1,3,3,3-hexafluoropropane (HFC-236fa) ; et l'heptafluoropropane 1,1,1,2,3,3,3-heptafluoropropane (HFC-227ea), ou qui en est constituée.

11. Composition formant agent porogène selon la revendication 10, qui contient : le HFC-365mfc et le HFC-152a ; 1e HFC-365mfc et le HFC-32 ; le HFC-365mfc, 1e HFC-152a et du CO₂ ; le HFC-365mfc, le HFC-32 et du CO₂ ; le HFC-365mfc, le HFC-152a et le HFC-134a, ou qui en est constituée.

12. Composition formant agent porogène selon la revendication 10, **caractérisée en ce qu'**elle contient 10 à < 50 % en poids de 1,1,1,3,3-pentafluorobutane (HFC-365mfc) et 90 à > 50 % en poids du ou des autres composants, de préférence le difluorométhane (HFC-32) et/ou le 1,1-difluoroéthane (HFC-152a), ou en est constituée.

13. Composition formant agent porogène selon la revendication 10, **caractérisée en ce qu'**elle contient 2 à 50 % en poids de CO₂ liquéfié.

14. Composition formant agent porogène selon la revendication 10, à la condition que, si elle contient a) du 1,1,1,3,3-pentafluorobutane et b) du 1,1,1,3,3,3-hexafluoropropane (HFC-236fa) ; ou du 1,1,1,2,3,3,3-heptaftuoropropane (HFC-227ea), mais pas de CO₂, la composition formant agent porogène contienne moins de 50 % en poids de 1,1,1,3,3-pentafluorobutane et plus de 50 % en poids de 1,1,1,3,3,3-hexafluoropropane ou de 1,1,1,2,3,3,3-heptafluoropropane, ou en soit constituée.

15. Procédé selon la revendication 1 de préparation de matériaux plastiques expansés à base de polystyrène ou de polyéthylène, à la condition que, si la composition formant agent porogène contient a) du 1,1,1,3,3-pentafluorobutane et b) du 1,1,1,2-tétrafluoroéthane (HFC-134a) ; du 1,1,1,3,3-pentafluoropropane (HFC-24Sfa) ; du 1,1,1,3,3,3-hexafluoropropane (HFC-236fa) ; ou du 1,1,1,2,3,3,3-heptafluoropropane (HFC-227ea), mais pas de CO₂, elle contienne moins de 50 % en poids de 1,1,1,3,3-pentafluorobutane et plus de 50 % en poids de 1,1,1,2-tétrafluoroéthane ; de 1,1,1,3,3-pentafluoropropane; de 1,1,1,3,3,3-hexafluoropropane ou de 1,1,1,2,3,3,3-heptafluoropropane, ou en soit constituée.

16. Mousses rigides de polyuréthane, essentiellement à alvéoles fermées, ou matériaux synthétiques thermoplastiques expansés, **caractérisés en ce qu'**ils contiennent une composition formant agent porogène, qui contient a) un pentafluorobutane, de préférence le 1,1,1,3,3-pentafluorobutane (HFC-365mfc), et b) au moins un autre agent porogène choisi dans l'ensemble comprenant le difluorométhane (HFC-32) ; un difluoroéthane, de préférence le 1,1-difluoroéthane (HFC-152a) ; le 1,1,2,2-tétrafluoroéthane (HFC-134) ; le 1,1,1,2-tétrafluoroéthane (HFC-134a) ; un pentafluoropropane, de préférence le 1,1,1,3,3-pentafluoropropane (HFC-245fa) ; un hexafluoropropane, de préférence le 1,1,2,3,3,3-hexafluoropropane (HFC-236ea) ou le 1,1,1,3,3,3-hexafluoropropane (HFC-236fa) ; un heptafluoropropane, de préférence le 1,1,1,2,3,3,3-heptafluoropropane (HFC-227ea), ou qui en est constituée.

17. Mousses rigides de polyuréthane, essentiellement à alvéoles fermées, ou matériaux synthétiques thermoplastiques expansés selon la revendication 16, **caractérisés en ce qu'**ils contiennent une composition formant agent porogène, qui contient a) 5 à < 50 % en poids d'un pentafluorobutane, de préférence le 1,1,1,3,3-pentafluorobutane (HFC-365mfc), et b) > 50 à 95 % en poids d'au moins un autre agent porogène choisi dans l'ensemble comprenant le difluorométhane (HFC-32) ; un difluoroéthane, de préférence le 1,1-difluoroéthane (HFC-152a) ; le 1,1,2,2-tétrafluoroéthane (HFC-134) ; le 1,1,1,2-tétrafluoroéthane (HFC-134a) ; un pentafluoropropane, de préférence le 1,1,1,3,3-pentafluoropropane (HFC-245fa) ; un hexafluoropropane, de préférence le 1,1,2,3,3,3-hexafluoropropane (HFC-236ea) ou le 1,1,1,3,3,3-héxafluoropropane (HFC-236fa) ; un heptafluoropropane, de préférence le 1,1,1,2,3,3,3-heptafluoropropane (HFC-227ea), ou qui en est constituée.

18. Mélange formant agent porogène, utilisable pour préparer des mousses rigides de PU présentant des propriétés améliorées pour ce qui concerne la conductivité thermique à basse température, qui contient 5 à < 50 % en poids de 1,1,1,3,3-pentafluorobutane et > 50 à 95 % d'au moins un hydrocarbure fluoré choisi dans l'ensemble comprenant le 1,1,1,3,3,3-hexafluoropropane et le 1,1,1,2,3,3,3-heptafluoropropane, ou qui en est constitué.
